# EUROPÄISCHE PATENTSCHRIFT

(11) **EP 2 205 880 B1**
(45) Veröffentlichungstag und Bekanntmachung des Hinweises auf die Patenterteilung: **13.06.2012**
(21) Anmeldenummer: 08787114.1
(22) Anmeldetag: 11.08.2008
(51) Int. Cl.: F16C 35/067

(54) **LAGEREINHEIT**
BEARING UNIT
UNITE PALIER

(30) Priorität: 28.09.2007 DE 102007046527
(43) Veröffentlichungstag der Anmeldung: 14.07.2010
(73) Patentinhaber: Schaeffler Technologies AG & Co. KG, 91074 Herzogenaurach (DE)
(72) Erfinder: ANGER, Andre, 91486 Uehlfeld (DE); SCHARINGER, Klaus, 91186 Gauchsdorf (DE)
(86) Internationale Anmeldenummer: PCT/EP2008/060540
(87) Internationale Veröffentlichungsnummer: WO 2009/043633

(56) Entgegenhaltungen:
- EP-A- 0 597 438
- DE-A1- 2 905 683
- DE-A1- 10 347 361
- DE-A1- 19 859 307
- DE-A1-102004 032 365
- FR-A- 2 469 609
- FR-A- 2 627 561

## Beschreibung

### Gebiet der Erfindung

Die vorliegende Erfindung betrifft eine Lagereinheit und eine Verwendung dieser besonderen Lagereinheit.

### Hintergrund der Erfindung

Bei Lagereinheiten ist dafür Sorge zu tragen, dass die Position einer Lagerschale gegenüber einem benachbarten oder angrenzenden Bauelement (im Folgenden "benachbartes Bauelement") auch im Betrieb der Lagereinheit und bei auftretenden Wärmeausdehnungen für betriebsbedingte Temperaturänderungen erhalten bleibt, wobei beispielsweise ein axiales Auswandern der Lagerschale und/oder eine Rotation der Lagerschale gegenüber dem benachbarten Bauelement zu vermeiden ist. Hierzu ist es aus dem Stand der Technik bekannt, die Lagerschale mit einem Presssitz mit sehr großem Übermaß gegenüber dem benachbarten Bauelement abzustützen. Alternativ oder kumulativ Einsatz finden kann eine Sicherung mittels einem mechanischen Element, wie beispielsweise ein Sicherungsring oder eine Mutter, oder mittels einer Verklebung von Lagerschale und benachbartem Bauelement, einer Ausbildung der Lagerschale mit einem flanschartigen Bund, welcher an dem benachbarten Bauelement zwecks axialer Sicherung zur Anlage kommt, oder mittels einer Verstemmung des benachbarten Bauelementes mit der Lagerschale und Ähnliches.

DE 1 525 296 A1 offenbart eine Lagerung einer Welle eines Lenkgetriebes über ein Nadellager gegenüber einer Gehäusewand. Das Nadellager besitzt eine aus einem Blech gefertigte Lagerhülse, an welcher radial außenliegend die Nadeln abwälzen. Die Lagerhülse besitzt eine umlaufende, integral von dem Blech ausgebildete und radial nach außen vorstehende Sicke oder U-förmige Faltung, die eine flanschartige Anlage bildet. In eingebautem Zustand kommt die flanschartige Anlage zur Anlage an die Gehäusewand, wodurch eine formschlüssige einseitige axiale Sicherung der Lagerhülse und damit des Nadellagers gegenüber der Gehäusewand erfolgt. Eine zusätzliche axiale Sicherung in die andere Richtung kann durch Einsatz einer Endplatte erfolgen, welche eine ringförmige Aussparung besitzt, in der die flanschartige Anlage Aufnahme finden kann. Die Endplatte ist mit der der flanschartigen Anlage zugeordneten Außenseite der Gehäusewand verbunden, wobei die flanschartige Anlage zwischen der Gehäusewand und der Endplatte "gefangen" ist.

DE 39 31 447 A1 offenbart die Anordnung eines als Zylinderrollenlager ausgebildeten Wälzlagers mit einem Presssitz auf einer weicheren Lagersitzfläche eines Maschinenteils und eines Lagergehäuses. Eine formschlüssige Lagesicherung einer Lagerschale des Wälzlagers erfolgt durch mindestens eine umlaufende Rille im Kontaktbereich zwischen Wälzlagerring und Maschinenteil sowie Gehäuse. Die Rille besitzt einen scharfkantigen Übergang zur zylinderförmigen Mantelfläche der Lagerschale. Infolge des gewählten Presssitzes zwischen Lagerschale und Maschinenteil sowie Gehäuse quillt Material des Maschinenteils sowie des Gehäuses bei der Montage in die Rille und führt zu einer Verdickung des Maschinenteiles bzw. des Gehäuses, wodurch ein eine axiale Lagesicherung bewirkender Formschluss entstehen soll. Die scharfen Kanten der Rillen können Material von der weicheren Oberfläche des Lagersitzes "abschaben". Das Material kann sich in den Rillen ansammeln. Alternativ kann durch die Aufschiebebewegung entlang des Lagersitzes eine Verletzung der Oberfläche des Lagersitzes durch die scharfen Kanten der Rillen mit gleichzeitigem Verschweißeffekt eintreten.

DE 29 05 683 A1 offenbart eine Lagerung einer Achswelle eines Hinterradgetriebes über zwei als Kegelrollenlager ausgebildete Wälzlager. Die Kegelrollenlager stützen sich unter Zwischenschaltung von zwei im Halblängsschnitt L-förmigen Hülsen an dem Gehäuse ab, wobei ein in Längsrichtung orientierter Schenkel des L eine innere Mantelfläche zur Abstützung von Radialkräften der Wälzlager bereitstellt, während ein radial nach innen orientierter Schenkel des L einen Ringflansch bildet. Der in Längsrichtung orientierte Schenkel besitzt im Bereich seiner äußeren Mantelfläche eine Rändelung, die über den gesamten Umfang der Hülse verläuft, eine bestimmte axiale Länge hat und mittels einer Gewinderollmaschine derart hergestellt ist, dass der Spitzen- bzw. Kopfdurchmesser der Rändelung größer ist als der Außendurchmesser der Hülse und der Kern- bzw. Fußdurchmesser der Rändelung kleiner ist als der Außendurchmesser der Hülse. Beim Einbau der Hülse in eine Lagerbohrung des Gehäuses wird die Hülse in die Lagerbohrung mit ihrem Ringflansch voran eingepresst. Mit Einführung des gerändelten Abschnittes der Hülse in die Lagerbohrung werden die Spitzen bzw. Köpfe der Rändelung in die Innenwand der Lagerbohrung gepresst, wobei das Material der Innenwand der Lagerbohrung in die Zahnzwischenräume der Rändelung gequetscht bzw. gepresst wird, so dass die Innenwand die Kontur der Rändelung annimmt. Hierdurch wird eine Lagesicherung der Hülse auch bei hohen Drehzahlen des Wälzlagers und hoher Umgebungstemperatur gewährleistet. Anstelle der Rändelung der Hülse kann auch eine Verzahnung eingesetzt werden, die ebenfalls mittels einer Gewinderollmaschine hergestellt werden soll.

Aus DE 26 11 218 A1 ist eine form- und kraftschlüssige Verbindung einer Lagerschale eines Wälzlagers mit einer Gehäusewand oder Welle bekannt. Hierbei besitzt die Lagerschale eine umlaufende Nut. Das Material der Gehäusewand oder der Welle, welches weicher ist als das Material der Lagerschale, wird mittels eines Pressstempels derart verformt, dass Material in radialer Richtung in die Nut der Lagerschale eintritt. Zwecks Reduktion der mittels des Pressstempels aufzubringenden Presskräfte wird weiterhin vorgeschlagen, durch diskrete in Umfangsrichtung verteilte Kontaktstellen zwischen Pressstempel und Gehäusewand bzw. Welle den Werkstoff lediglich abschnittsweise in die Nut der Lagerschale einzupressen.

Schließlich offenbart DE 101 53 432 C1 ein als Kugellager ausgebildetes Wälzlager, dessen Außenring einen radial orientierten Flansch besitzt. Dieser Flansch besitzt einen in Umfangsrichtung umlaufenden keilförmigen Fortsatz, welcher ein Stempelelement bildet. Wird mit der Montage des Wälzlagers mit einer Gehäusewand das Wälzlager in eine Bohrung der Gehäusewand eingeführt, bis der Flansch gegen die Gehäusewand gepresst wird, bewirkt das Stempelelement eine plastische Verformung von Material der Gehäusewand radial nach innen, wo das plastisch verformte Material formschlüssige Aufnahme in einer umlaufenden Vertiefung der Lagerschale findet. Eine zusätzliche Verbindung zwischen Lagerschale und Gehäusewand erfolgt dadurch, dass abseits des Flansches (aber unmittelbar benachbart der Vertiefung) die Mantelfläche der Lagerschale, die in der Bohrung der Gehäusewand abgestützt ist, mit einer Rändelung versehen ist, welche sich in die Gehäusewand einformt, so dass durch den entstehenden Formschluss ein Verdrehen der Lagerschale relativ zu der Gehäusewand nach der Montage ausgeschlossen ist.

DE 42 38 147 A1 offenbart eine Radial-Nadellager-Baueinheit mit integrierter Radial-Axialabdichtung sowie integriertem Käfig. Die Radial-Nadellager-Baueinheit stützt sich radial außenliegend in einer abgestuften Bohrung eines Getriebegehäuses ab. Eine Außenhülse der Radial-Nadellager-Baueinheit, an welcher radial innenliegend die Nadeln abwälzen, ist aus einem im Halblängsschnitt U-förmig abgewinkelten Blech mit konstanter Wandstärke gebildet, in welches offensichtlich Einschnitte eingebracht sind zur Bildung von Rastzungen, die über eine Lagersitzfläche der Radial-Nadellager-Baueinheit radial nach außen hervorstehen. Mit dem Einsetzen der Außenhülse in die abgestufte Bohrung des Getriebegehäuses sollen sich die Rastzungen in der Bohrung festkrallen.

DE 10 2004 032 365 A1 betrifft eine Startvorrichtung für Brennkraftmaschinen, wobei eine Antriebswelle über ein Wälzlager an einem Antriebslagerschild gelagert werden soll. Das Wälzlager wird hierbei von innen so in eine Bohrung des Antriebslagerschilds eingesetzt, dass ein Bund des Außenrings des Wälzlagers von innen zur Anlage an eine Stirnseite des Antriebslagerschilds kommt. Damit kann ein Verschieben des Außenrings und damit des Wälzlagers aus dem Antriebslagerschild heraus verhindert werden. Der Bund kann hierbei als umlaufender Wulst ausgebildet sein. In alternativer Ausgestaltung finden anstelle eines ringartigen Wulstes mehrere über den Umfang des Außenrings verteilte Vorsprünge Einsatz. Zur Herstellung der Vorsprünge wird der Außenring in einem Übergangsbereich von der zylindrischen Kontur zu dem axialen Bund in eine Axialrichtung durch einen Stempel derart verformt, dass sich der Vorsprung bildet.

Auch DE 10 2007 022 315 A1 beschreibt die Ausbildung einer Radial-Nadellager-Baueinheit mit einer Außenhülse, welche im Halblängsschnitt U-förmig abgewinkelt ist. Auch hier werden Haltenasen von Federzungen der Außenhülse ausgebildet, die begrenzt sind durch Freistiche. Die Haltenasen sind federnd ausgebildet und überragen die von der Außenhülse ausgebildete Lagersitzfläche radial nach außen. Die Haltenasen sollen für einen festen Sitz der Radial-Nadellager-Baueinheit in einer Bohrung eines Gehäuses sorgen.

Gemäß DE 38 05 707 A1 besitzt eine Außenhülse eines Radialwälzlagers an mehreren Stellen der Oberfläche durch Ausstanzen bzw. Ausschneiden gebildete Zungen, die mit ihren freien Enden die Lagersitzfläche der Außenhülse elastisch federnd überragen. Die Zungen sollen mit ihren Enden widerhakenartig in den Werkstoff der Bohrung eines Gehäuses eingreifen und auf diese Weise verhindern, dass die Außenhülse sich ungewollt axial bewegt.

US 2,333,400 widmet sich einem besonderen Einsatzzweck einer Lagereinheit, nämlich der Verwendung einer Lagereinheit für Rollerskates u. ä., wobei der zu lagernder Körper wie das Rad der Rollerskates aus Holz oder Plastik besteht. Die Außenfläche einer halbkugelförmigen Lagerschale für die Rollerskates wird mit einer radial nach außen hervorstehenden Nase ausgestattet, welche ähnlich einem Zahn ausgebildet ist mit ebenen Zahnflanken, welche offensichtlich in einem spanabhebenden oder gießtechnischen Fertigungsverfahren hergestellt sind. Die Lagerschale wird in das weichere Material der Rollen der Rollerskates, also das Holz oder den Kunststoff, eingepresst, um ein axiales Eingreifen der Zunge der Lagerschale in das benachbarte Material zu ermöglichen.

US 2,779,641 offenbart ein Kugellager mit einem Außenring aus einem elastischen, wärmebehandelten Stahl. Der Außenring ist radial geschlitzt. Die Mantelfläche des Außenrings ist mit Vorsprüngen oder Rippen ausgestattet. Das Einsetzen des Außenrings in eine Bohrung eines Gehäuses erfolgt unter elastischer Verformung des Außenrings unter Verringerung der Breite des Schlitzes. Mit der Expansion des Außenrings nach dem Einsetzen infolge der Elastizität des Außenrings werden die Vorsprünge oder Rippen gegen die Innenfläche der Bohrung des Gehäuses gepresst, wo sich diese in das Wandungsmaterial eingraben sollen.

Bei dem aus DE 101 53 432 C1 bekannten Wälzlager ist der Außenring einstückig mit einem ringförmigen radialen Flansch ausgestattet, welcher sich in axialer Richtung an eine Gehäusewandung anlegt. Hierdurch erfolgt eine Sicherung der axialen relativen Position des Außenrings gegenüber dem Gehäuse. Der ringförmige umlaufende Flansch ist im Kontaktbereich mit dem Gehäuse mit einem Vorsprung ausgestattet, welcher axial gegen das Gehäuse gepresst wird, womit das Gehäuse plastisch verformt wird unter Ausbildung einer Vertiefung. Der Vorsprung des Flansches und die Vertiefung des Gehäuses bilden eine formschlüssige Verbindung.

FR 2 469 609 offenbart ein Lager mit einer im Halblängsschnitt U-förmigen Außenschale, bei welcher im Übergangsbereich von einem Grundschenkel zu einem Seitenschenkel ein Vorsprung über die Lagersitzfläche der Außenschale hinausragt. Der Vorsprung soll durch Kaltverformung mittels eines Stempels hergestellt werden.

DE 92 04 957 U1 offenbart ein mehrreihiges Wälzlager, bei welchem in den Außenring zwischen den beiden Reihen umlaufende Nuten eingebracht sind, die möglichst scharfkantig ausgebildet sein sollen, aber eine kreissegmentförmige Nutgeometrie besitzen. Kommt es infolge der Belastung der Reihen zu einer Verformung des Außenrings, graben sich die Kanten der Nuten in ein das Wälzlager aufnehmende Gehäuse ein. Ergänzend schlägt die Druckschrift vor, in einer Nut einen über die Lagersitzfläche radial nach außen herausragenden Kunststoffring einzusetzen, welcher die Haftung des Wälzlagers in dem Gehäuse erhöhen soll.

DE 198 59 307 A1 betrifft ein spieleinstellendes Wälzlager, mit dem Fertigungstoleranzen kompensiert werden sollen. Vorgeschlagen wird, dass eine Lagerschale unter plastischer Verformung in eine Lageraufnahmebohrung eines Gehäuses eingesetzt wird. Die plastische Verformung kann vereinfacht werden, indem die Mantelfläche der Lagerschale mit geometrischen Freisparungen oder achsparallel verlaufenden, beispielsweise polygonartig angeordneten Rändelungen ausgestattet ist. Hierbei können sich die Freisparungen auch lediglich in mehreren Teilumfangsbereichen der Lagerschale erstrecken.

### Aufgabe der Erfindung

Der Erfindung liegt die Aufgabe zugrunde, eine Lagereinheit und Verwendung dieser besonderen Lagereinheit, welche unter Berücksichtigung des Fertigungs- und Montageaufwandes eine gute Positionssicherung einer Lagerschale gegenüber einem benachbarten Bauelement gewährleistet, für einen besonderen Einsatzzweck vorzuschlagen.

### Zusammenfassung der Erfindung

Erfindungsgemäß wird die Aufgabe durch die Merkmale des unabhängigen Anspruchs 1 gelöst. Weitere Ausgestaltungen der Erfindung sind durch die Merkmale der abhängigen Patentansprüche 2 bis 5 gegeben.

In einer erfindungsgemäß verwendeten Lagereinheit findet eine Lagerschale Einsatz, die im Bereich einer Lagersitzfläche gegenüber einem benachbarten Bauelement, beispielsweise in einer Aufnahmebohrung eines Gehäuses oder einer Wandung, abgestützt ist. Hierbei kann die Lagersitzfläche zylinderförmig ausgebildet sein oder bei Schnittführung entlang einer Lagerachse der Lagereinheit leicht ballig ausgebildet sein. Bei Ausbildung des benachbarten Bauelementes als Gehäuse ist die Lagersitzfläche als äußere Mantelfläche ausgebildet. Bereits vor der Montage von Lagerschale und benachbartem Bauelement besitzt die Lagerschale mindestens einen sich radial über die Lagersitzfläche hinaus erstreckenden Vorsprung. Somit erfolgt abweichend zu den Druckschriften DE 26 11 218 A1, DE 39 31 447 A1 und DE 101 53 432 C1 nicht (ausschließlich) eine plastische Verformung zur Ausbildung eines Vorsprunges während der Montage, was die Montage kompliziert werden lässt und eine exakte Montagesteuerung (u. U. erst beim Kunden) erfordert, sondern vielmehr kann eine Fertigung der Vorsprünge mit vermindertem Aufwand, aber gleichzeitig unter Umständen verbesserter Präzision bereits vor der Montage erfolgen. Selbstverständlich kann ergänzend zu diesem erfindungsgemäßen Merkmal auch während der Montage eine zusätzliche plastische Verformung gemäß den vorgenannten Druckschriften erzielt werden.

Somit folgt die vorliegende Erfindung zunächst grundsätzlich dem aus der DE 29 05 683 A1 bekannten und eingangs erläuterten Weg einer Einbringung einer Verbindungskontur bereits vor einer Montage.

Allerdings hat die Erfindung erkannt, dass die aus DE 29 05 683 A1 bekannte Ausführungsform einer Lagereinheit zusätzlich zu den ohnehin vorhandenen Lagerschalen eine Hülse erfordert. Durch die gemäß DE 29 05 683 A1 vorgeschlagene Rändelung der Hülse kann zwar eine gute Verbindung zwischen Hülse und Gehäuse hergestellt werden - dennoch kann es zwischen Lagerschale und Hülse zu unerwünschten Positionsänderungen im Betrieb der Lagereinheit kommen. Abweichend hierzu schlägt die vorliegende Erfindung vor, einen zur Verbindung mit dem benachbarten Bauelement dienenden Vorsprung unmittelbar in die Lagerschale einzubringen. Hierdurch kann nicht nur die Teilevielfalt der Lagereinheit reduziert werden, sondern weiterhin kann die Montage durch Einsparung eines Montageschrittes vereinfacht werden und ein zusätzlicher, den Betrieb der Lagereinheit negativ beeinflussender Freiheitsgrad zwischen Hülse und Lagerschale gemäß dem Stand der Technik beseitig werden.

Andererseits beruht die vorliegende Erfindung auf der Erkenntnis, dass eine gleichmäßige, durchgehend umlaufende Verteilung von Vorsprüngen in Form einer Verzahnung oder Rändelung gemäß DE 29 05 683 A1 signifikante Nachteile mit sich bringt:
a) Ist eine maximale Montagekraft vorgegeben, ist diese abhängig von einer gewünschten elastischen oder plastischen Verformung infolge der Verzahnung oder Rändelung. Je größer die Zahl der Zähne ist, desto kleiner wird die auf einen Zahn maximal wirkende Montagekraft und Verformung. Dies bedeutet, dass mit einer Vergrößerung der Zahl der wirkenden Zähne auch die Fertigungsgenauigkeit für die Zähne ansteigt. Anders gesagt bedeutet dies, dass bei einer gegebenen gewünschten Fertigungsgenauigkeit die aus der DE 29 05 683 A1 bekannte Ausführungsform große Montagekräfte erfordert.
b) Andererseits wirken die Rändelung oder die Zähne in Umfangsrichtung durchgehend oder nahezu durchgehend mit dem benachbarten Bauelement zusammen, wobei zwischen benachbarten Zähnen keine "Verformungswege" vorgesehen werden können, sondern die Materialien in Umfangsrichtung gleichermaßen stark beansprucht sind.

Den vorgenannten Erkenntnissen trägt die Erfindung dadurch Rechnung, dass ein oder mehrere Vorsprünge lediglich in einem Teilumfangsbereich der Lagerschale vorgesehen sind, während ein weiterer Teilumfangsbereich ohne Vorsprung ausgebildet ist. Hierdurch kann die Gesamtzahl der wirkenden Vorsprünge reduziert werden, was im Extremfall bedeuten kann, dass lediglich ein Teilumfangsbereich, zwei Teilumfangsbereiche, drei Teilumfangsbereiche mit mindestens einem Vorsprung vorgesehen sind. Hierdurch können ohne überhöhte Anforderungen an die Fertigungsgenauigkeiten und die Abmessungen der Vorsprünge sowie die Passungen zwischen Lagerschale und benachbartem Bauelement die erforderlichen Montage- und Fügekräfte klein gehalten werden. Andererseits können die Teilumfangsbereiche ohne Vorsprung als Verformungsbereiche gezielt genutzt werden. In einem Extremfall der erfindungsgemäßen Ausgestaltung der Lagereinheit ist lediglich ein Vorsprung oder sind lediglich zwei, drei oder vier Vorsprünge vorgesehen, die gleichmäßig oder ungleichmäßig in Umfangsrichtung verteilt sein können.

Als möglicher weiterer Vorteil der erfindungsgemäßen Ausgestaltung kann sich ergeben, dass eine Montage von Lagerschale und benachbartem Bauelement lediglich in einer, zwei, drei oder vier oder mehr ausgewählten Winkellagen ermöglicht ist, wodurch ein fehlerhafte Montage vermieden werden kann, sofern die Winkelausrichtung der Lagerschale zu dem benachbarten Bauelement von Bedeutung ist.

Gemäß dem Vorschlag der Erfindung ist während der Montage von Lagerschale und benachbartem Bauelement der mindestens eine Vorsprung elastisch verformbar. Hierbei ist die Anbindung des mindestens einen Vorsprungs an weitere Teile der Lagerschale derart gewählt, dass die während der Montage erzeugte radial wirkende Kontaktspannung in einer Kontaktfläche zwischen dem Vorsprung und dem Bauelement groß genug ist, um eine plastische Verformung des benachbarten Bauelementes im Bereich der Kontaktfläche hervorzurufen. Eine konstruktive Vorgabe der wirkenden Kontaktspannung kann hierbei insbesondere über
- das Material und die Steifigkeit der Lagerschale,
- die Abmessungen der Anbindung des Vorsprunges an weitere Bestandteile der Lagerschale,
- die gewählten Passungen zwischen Lagerschale und benachbartem Bauelement und
- das Ausmaß, mit dem sich der Vorsprung über die Lagersitzfläche hinaus erstreckt
erfolgen. Diese Ausgestaltung der Erfindung nutzt insbesondere aus, dass für die Lagerschale infolge der Bereitstellung einer Wälzfläche für die Wälzkörper ohnehin ein gehärtetes Material gewählt wird, während für das benachbarte Bauelement ein relativ weicheres Material gewählt ist. Somit kann sich der Vorsprung während der Montage oder anschließend an die Montage plastisch in das benachbarte Bauelement einformen, so dass sich ohne erhöhten Fertigungsaufwand eine formschlüssige Verbindung zwischen der eingeformten Ausnehmung des benachbarten Bauelementes und dem Vorsprung ergibt. Hierbei kann die derart hergestellte formschlüssige Verbindung einerseits axial, also in Richtung der Lagerachse, wirken. Formt der Vorsprung mit der Montage in axialer Richtung eine Art "Furche" in das benachbarte Bauelement ein, kann ein Formschluss in axialer Richtung gegeben sein, welcher in Fügerichtung größer ist als in die entgegen gesetzte Richtung, also in Richtung der Furche. Möglich ist aber auch eine in axiale Richtung beidseitig spielfreie Aufnahme des Vorsprunges in der plastisch eingeformten Ausnehmung. Andererseits ist der Vorsprung auch in Umfangsrichtung formschlüssig in der eingeformten Ausnehmung aufgenommen.

Das plastische Einformen in das benachbarte Bauelement kann durch eine Erwärmung des benachbarten Bauelementes vor oder während der Montage unterstützt werden. Ebenfalls denkbar ist, dass bei Montagetemperatur lediglich ein reibschlüssiges Anliegen des Vorsprunges an der Mantelfläche des benachbarten Bauelementes gegeben ist, während sich für einen Betrieb der Lagerreinheit mit sich einstellender erhöhter Betriebstemperatur erst ein Einformen der dem Vorsprung zugeordneten Ausnehmung erfolgt.

Gemäß dem Vorschlag der Erfindung findet die Lagereinheit Einsatz für einen Starter eines Kraftfahrzeuges. In diesem Fall kann das benachbarte Bauelement ein Gehäuse des Starters sein, während radial innen liegend in der Lagereinheit eine rotierende Starterwelle des Starters gelagert ist.

Gemäß einem weiteren Vorschlag der Erfindung ist der mindestens eine Vorsprung in axialer Richtung, also in Richtung der Lagerachse, vor oder hinter einer durch die Lagerschale bereitgestellten Wälzfläche angeordnet. Üblicherweise werden an eine derartige Wälzfläche hinsichtlich er Rundheit, Maßhaltigkeit und Oberflächen erhöhte Anforderungen gestellt, die dann nur erschwert eingehalten werden können, wenn der Vorsprung der Lagerschale im Bereich der Wälzfläche erzeugt oder angeordnet werden muss. Hier schafft die Erfindung Abhilfe durch Anordnung des Vorsprunges außerhalb der Wälzlagerfläche, wo durch den Vorsprung verursachte Unrundheiten, Abmessungstoleranzen oder Oberflächenbeeinträchtigungen eher akzeptabel sind oder nicht auftreten.

Eine besonders einfache Fertigung der Lagerschale für die erfindungsgemäße Lagereinheit ist gegeben, wenn diese ein Umformteil ist, beispielsweise aus einem ringförmigen oder streifenförmigen Halbzeug. In dem Umformprozess wird die Lagerschale mit einem in erster Näherung U-förmigen Halblängsschnitt erzeugt. Die Lagerschale besitzt nach der Umformung einen Grundschenkel, welcher parallel zu einer Lagerachse orientiert ist und die Wälzfläche bildet. Weiterhin werden von dem Grundschenkel zwei Seitenschenkel abgewinkelt, so dass sich diese quer zu der Lagerachse orientieren. Hierbei kann es vorteilhaft sein, wenn der mindestens eine Vorsprung im Übergangsbereich von dem Grundschenkel zu den Seitenschenkeln angeordnet ist, also möglichst weit am äußeren Rand des Grundschenkels, so dass die Hauptfunktion der Lagerschale in Form der Bereitstellung der Wälzfläche möglichst wenig beeinträchtigt werden kann.

Ein weiterer möglicher Vorteil einer Herstellung des Vorsprunges im Übergangsbereich zwischen einem Seitenschenkel und einem Grundschenkel des U ist, dass in diesem Übergangsbereich bereits eine Umformung erfolgt ist, welche zu einer Erhöhung der Festigkeit des Materiales führt. Die zusätzliche Umformung zur Herstellung des Vorsprunges kann zu einer weiteren Erhöhung des Umformgrades mit einer hieraus resultierenden weiter erhöhten Festigkeit führen.

Eine Multifunktionalität der Lagerschale ist gegeben, wenn zwischen den vorgenannten Seitenschenkeln mindestens ein Dichtring, Wälzkörper und/oder ein Lagerkäfig gefangen sind, so dass diese in axialer Richtung, ggf. unter einem gewissen Spiel, fixiert sind.

Untersuchungen der Anmelderin haben gezeigt, dass der vorgenannte gewünschte Effekt eines Einformens einer Ausnehmung in das benachbarte Bauelement durch den Vorsprung mit gut handhabbaren Montagekräften dann möglich ist, wenn die Lagerschale aus Stahl gefertigt ist, welcher gehärtet werden kann, während das benachbarte Bauelement aus Aluminium gefertigt ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft, ohne dass diese zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Kurze Beschreibung der Zeichnungen

Weitere Merkmale der Erfindung ergeben sich aus der folgenden Beschreibung und den zugehörigen Zeichnungen, in denen Ausführungsbeispiele der Erfindung schematisch dargestellt sind. Es zeigen:
- Figur 1: eine erfindungsgemäß eingesetzte Lagereinheit ohne benachbartes Bauelement in einem Längsschnitt;
- Figur 2: ein Detail II-II der erfindungsgemäß eingesetzte Lagereinheit gemäß Figur 1; und
- Figur 3: eine vereinfachte Darstellung einer Lagerschale für eine erfindungsgemäß eingesetzte Lagereinheit in einer dreidimensionalen Darstellung.

### Ausführliche Beschreibung der Erfindung

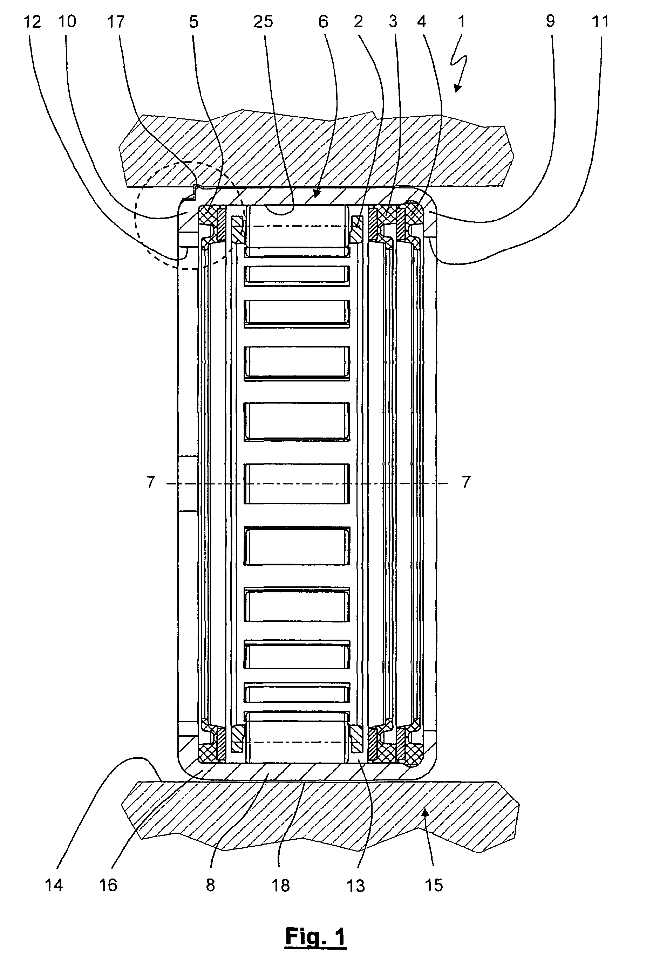

Figur 1 zeigt eine Lagereinheit 1, die mit einem Lagerkäfig 2, hier beidseits des Lagerkäfigs 2 angeordneten Dichtungen 3, 4, 5 und einer Lagerschale 6 gebildet ist. Die Lagerschale 6 ist in einem Halblängsschnitt bezüglich der Längsachse oder Lagerachse 7-7 U-förmig ausgebildet mit einem parallel zur Lagerachse 7-7 orientierten Grundschenkel 8 sowie zwei ungefähr gleich langen Seitenschenkeln 9, 10, die sich von dem Grundschenkel 8 radial nach innen erstrecken. Infolge der Umformung der Seitenschenkel 9, 10 in Form der Abwicklung derselben aus einem Halbzeug sind die Übergangsbereiche zwischen Grundschenkel 8 und Seitenschenkeln 9, 10 abgerundet ausgebildet. Stirnseiten 11, 12, der Seitenschenkel 9, 10 bilden Bohrungen für einen Durchtritt einer in den Figuren nicht dargestellten Welle. Diese Welle bildet mit der Lagerschale 6 einen hohlzylinderförmigen, umlaufenden Innenraum 13 der Lagereinheit 1 mit radialen Spalten zwischen den Stirnseiten 11, 12 und der Welle, wobei eine Abdichtung des Innenraumes 13 über die Dichtungen 3, 4, 5 erfolgt. In dem Innenraum 13 sind die Dichtungen 3, 4, 5, Wälzkörper und der Lagerkäfig 2 angeordnet und eingeschlossen. Die Lagerschale 6 ist in einer Bohrung 14 eines benachbarten Bauelementes 15, hier ein Gehäuse oder eine Tragwandung, eingesetzt.

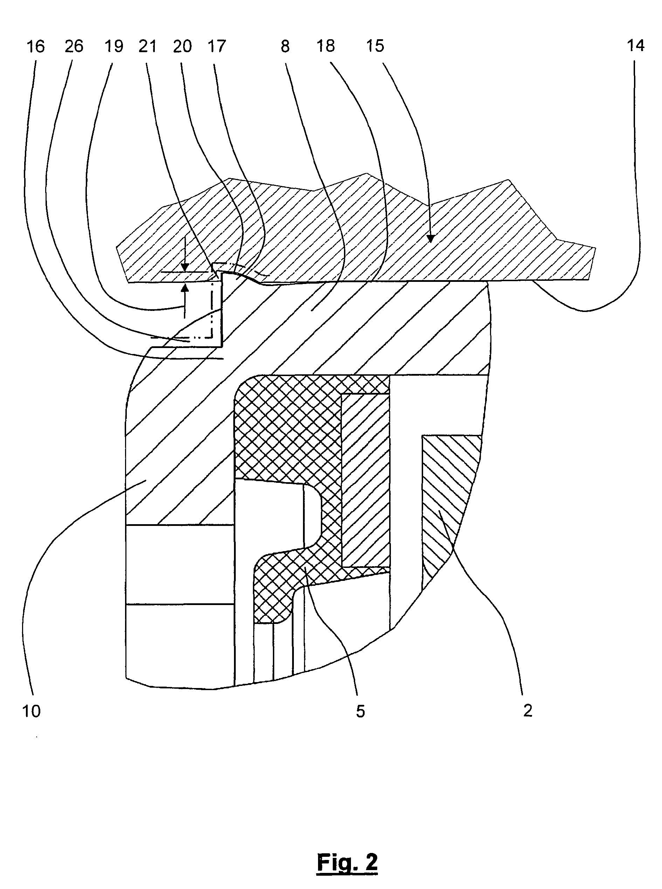

Wie in dem Detail gemäß Figur 2 zu erkennen ist, ist die Lagerschale 6 in einem Übergangsbereich 16 zwischen Seitenschenkel 10 und Grundschenkel 8 mit einem Vorsprung 17 ausgestattet. Während für das dargestellte Ausführungsbeispiel der Grundschenkel 8 radial außenliegend eine zylinderförmige Lagersitzfläche 18 bildet, die vorzugsweise mit einer Spielpassung, Übergangspassung oder Presspassung Aufnahme findet in der Bohrung 14 des benachbarten Bauelementes 15, erstreckt sich der Vorsprung 17 in radialer Richtung über den Durchmesser der Lagersitzfläche 18 hinaus, beispielsweise um 50, 80, 100, 150, 200, 500 µm, wobei auch von den vorgenannten Abmessungen Abweichungen um ± 20 % möglich sind. Das Maß, um welches sich der Vorsprung 17 über die Lagersitzfläche 18 hinaus radial nach außen erstreckt, ist in Figur 2 mit der Einpresstiefe 19 gekennzeichnet.

Mit dem Einbringen der Lagerschale 6 in die Bohrung 14 des benachbarten Bauelementes 15 presst sich der Vorsprung 17 an die Bohrung 14 im Bereich einer Kontaktfläche 20 an. Die in der Kontaktfläche 20 wirkende Kontaktspannung führt zu einer plastischen Verformung des benachbarten Bauelementes 15 in diesem Bereich, die die Erzeugung einer Ausnehmung 26 zur Folge hat, in welcher der Vorsprung 17 sowohl in Umfangsrichtung zu der Lagerachse 7-7 als auch in axialer Richtung formschlüssige Aufnahme finden kann.

Für das in Figur 2 dargestellte Ausführungsbeispiel wird der Vorsprung 17 durch Kalt- oder Warmverformung des Übergangsbereiches 16 hergestellt. Hierzu wird ein Umformwerkzeug in Richtung der Lagerachse 7 in einem Teilumfangsbereich des Übergangsbereiches 16 an diesen angepresst, bis das Werkzeug in den Übergangsbereich 16 eindringt und eine Ausnehmung 26 erzeugt. Das zu der Erzeugung der Ausnehmung 26 verlagerte Material wird vor dem Umformwerkzeug "hergeschoben" (vereinfacht vergleichbar einem Schieben einer Schaufel im Schnee) und führt vor dem Umformwerkzeug zu einer Verdickung, welche den Vorsprung 17 bildet. Somit ist für die dargestellte Ausführungsform dem Vorsprung 17 in axialer Richtung nach außen die Ausnehmung 26 vorgelagert. Sowohl die Kontur des Vorsprunges 17 als auch der Ausnehmung 26 können in dem in Figur 2 dargestellten Halblängsschnitt beliebig sein. Beispielsweise ist in dem dargestellten Halblängsschnitt die Ausnehmung 26 L-förmig begrenzt, während der Vorsprung 17 einem Zahn ähnelt mit einer quer zur Lagerachse orientierten Zahnflanke, während die andere Zahnflanke im Übergangsbereich von der vorgenannten Zahnflanke ungefähr parallel zur Lagerachse 7-7 orientiert ist und dann kurvenförmig in die Lagersitzfläche 18 übergeht.

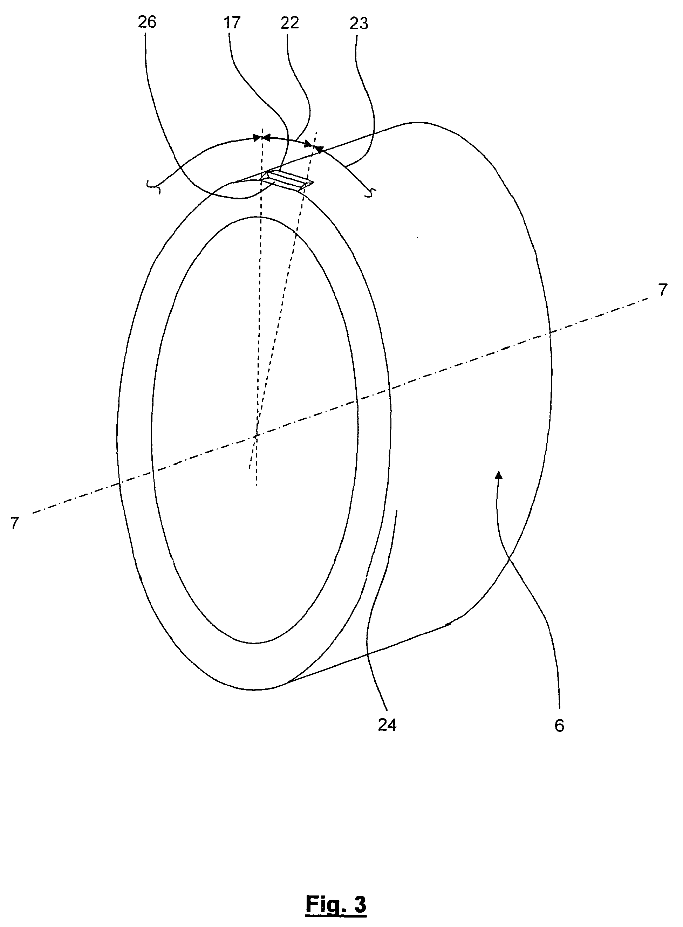

Für das in Figur 3 dargestellte Ausführungsbeispiel besitzt die Lagerschale 6 lediglich einen Vorsprung 17, welcher sich über einen Teilumfangsbereich 22 erstreckt, während der verbleibende andere Teilumfangsbereich 23 im Wesentlichen teilzylinderförmig ausgebildet ist. Der Teilumfangsbereich 22, in dem der Vorsprung 17 mit konstanter oder variierender Einpresstiefe 19 ausgebildet sein kann, kann einen Umfangswinkel besitzen von 1, 2, 4, 5, 8, 10, 15 oder 20°, wobei auch Abweichungen von ± 20 % von den vorgenannten Werten möglich sind. Für eine alternative Ausgestaltung können zwei, drei, vier oder fünf Vorsprünge 17 vorgesehen sein mit entsprechender Teilumfangserstreckung in den zugeordneten Teilumfangsbereichen 22, wobei zwischen benachbarten derartigen Vorsprüngen dann eine entsprechende Zahl verkleinerter Teilumfangsbereiche 23 ohne Vorsprünge 17 angeordnet sind. Hierbei können die Vorsprünge 17 gleichmäßig oder ungleichmäßig in Umfangsrichtung verteilt sein.

Für das dargestellte Ausführungsbeispiel sind die Vorsprünge 17 durch Umformen der Lagerschale 6 hergestellt. Ebenfalls möglich ist, dass diese bereits bei der Fertigung einer Lagerschale 6 in dieser erzeugt werden oder nachträglich an einem Grundkörper der Lagerschale befestigt werden.

Erfindungsgemäß kann die Pressung zwischen Lagerschale 6 und benachbartem Bauelement 15 klein gehalten werden und dennoch ein fester Sitz garantiert werden.

Anstelle des dargestellten Vorsprunges 17 können beliebige Aufwürfe, Haltenasen, Sicken oder Widerhaken an der Lagerschale 6 vorgesehen sein, ohne dass hierdurch der erfindungsgemäße Rahmen verlassen wird, welcher durch die Patentansprüche vorgegeben ist. Die Erzeugung des Formschlusses zwischen Vorsprung 17 und benachbartem Bauelement 15 hat keine Auswirkungen auf den Hüllkreisdurchmesser, wie diese beispielsweise entstehen können in Form einer Einschnürung durch zu große Pressungen. Bei dem Umformwerkzeug kann es sich beispielsweise um eine Art Meißel handeln.

Im Teilumfangsbereich 23 besitzt die Lagerschale 6 eine im Wesentlichen zylinderförmige Mantelfläche 24. Radial innen liegend bildet die Lagerschale eine Wälzfläche 25 für Wälzkörper.

### Bezugszeichenliste

- 1: Lagereinheit
- 2: Lagerkäfig
- 3: Dichtung
- 4: Dichtung
- 5: Dichtung
- 6: Lagerschale
- 7: Längsachse
- 8: Grundschenkel
- 9: Seitenschenkel
- 10: Seitenschenkel
- 11: Stirnseite
- 12: Stirnseite
- 13: Innenraum
- 14: Bohrung
- 15: benachbartes Bauelement
- 16: Übergangsbereich
- 17: Vorsprung
- 18: Lagersitzfläche
- 19: Einpresstiefe
- 20: Kontaktfläche
- 21: Ausnehmung
- 22: Teilumfangsbereich
- 23: Teilumfangsbereich
- 24: Mantelfläche
- 25: Wälzfläche
- 26: Ausnehmung

## Patentansprüche

1. Verwendung einer Lagereinheit (1)
a) mit einer Lagerschale (6),
b) die im Bereich einer Lagersitzfläche (18) gegenüber einem benachbarten Bauelement (15) abgestützt ist und eine Wälzfläche (25) für Wälzkörper bildet, wobei
c) die Lagerschale (6) vor der Montage von Lagerschale (6) und benachbartem Bauelement (15) mindestens einen sich radial über die Lagersitzfläche (18) hinaus erstreckenden Vorsprung (17) besitzt,
d) in einem Querschnitt der Lagerschale (6) an einen Teilumfangsbereich (22) mit dem oder mindestens einem Vorsprung (17) ein Teilumfangsbereich (23) mit im Wesentlichen teilzylinderförmiger Mantelfläche (24) ohne Vorsprung (17) anschließt,
e) der Vorsprung (17) durch Kalt- oder Warmverformung eines Übergangsbereichs (16) zwischen einem Seitenschenkel (10) und einem Grundschenkel (8) hergestellt ist, indem ein Umformwerkzeug in Richtung der Lagerachse (7) in einem Teilumfangsbereich des Übergangsbereichs (16) an den Übergangsbereich (16) angepresst wird, bis das Werkzeug in den Übergangsbereich (16) eindringt und eine Ausnehmung (26) erzeugt, wobei zu der Erzeugung der Ausnehmung (26) verlagertes Material vor dem Umformwerkzeug zu einer den Vorsprung (17) bildenden Verdickung führt,
**dadurch gekennzeichnet, dass**:
f) die Anbindung des mindestens einen Vorsprungs (17) an die teilzylinderförmige Mantelfläche (24) der Lagerschale (6) derart gewählt ist, dass während der Montage von Lagerschale (1) und benachbartem Bauelement (15) in einer Kontaktfläche (20) zwischen dem Vorsprung (17) und dem benachbarten Bauelement (15) eine radial wirkende Kontaktspannung erzeugt wird, die groß genug ist, um eine plastische Verformung des benachbarten Bauelementes (15) im Bereich der Kontaktfläche (20) hervorzurufen,
für eine Lagerung einer rotierenden Starterwelle eines Starters eines Kraftfahrzeugs radial innenliegend in der Lagereinheit (1), wobei das benachbarte Bauelement (15) ein Gehäuse des Starters ist.

2. Verwendung einer Lagereinheit (1) nach Anspruch 1, **dadurch gekennzeichnet, dass** mindestens ein Vorsprung (17) oder sämtliche Vorsprünge (17) in axialer Richtung vor oder hinter einer Wälzfläche (25) der Lagerschale (6) angeordnet ist.

3. Verwendung einer Lagereinheit (1) nach Anspruch 2, **dadurch gekennzeichnet, dass** die Lagerschale (6) ein Umformteil ist mit einem U-förmigen Halblängsschnitt mit einem parallel zu einer Lagerachse (7-7) orientierten Grundschenkel (8), der die Wälzfläche (25) bildet, sowie zwei quer zur Lagerachse (7-7) orientierten Seitenschenkeln (9, 10), wobei der mindestens eine Vorsprung (17) in einem Übergangsbereich (16) von dem Grundschenkel (8) zu einem Seitenschenkel (10) angeordnet ist.

4. Verwendung einer Lagereinheit (1) nach Anspruch 3, **dadurch gekennzeichnet, dass** zwischen den Seitenschenkeln (9, 10) mindestens eine Dichtung (3, 4, 5), Wälzkörper und/oder ein Lagerkäfig (2) gefangen ist/sind.

5. Lagereinheit (1)
a) mit einem Bauelement (15),
b) mit einer Lagerschale (6),
c) die im Bereich einer Lagersitzfläche (18) gegenüber dem Bauelement (15) abgestützt ist und eine Wälzfläche (25) für Wälzkörper bildet, wobei
d) die Lagerschale (6) vor der Montage von Lagerschale (6) und benachbartem Bauelement (15) mindestens einen sich radial über die Lagersitzfläche (18) hinaus erstreckenden Vorsprung (17) besitzt,
e) in einem Querschnitt der Lagerschale (6) an einen Teilumfangsbereich (22) mit dem oder mindestens einem Vorsprung (17) ein Teilumfangsbereich (23) mit im Wesentlichen teilzylinderförmiger Mantelfläche (24) ohne Vorsprung (17) anschließt,
f) der Vorsprung (17) durch Kalt- oder Warmverformung eines Übergangsbereichs (16) zwischen einem Seitenschenkel (10) und einem Grundschenkel (8) hergestellt ist, indem ein Umformwerkzeug in Richtung der Lagerachse (7) in einem Teilumfangsbereich des Übergangsbereichs (16) an den Übergangsbereich (16) angepresst wird, bis das Werkzeug in den Übergangsbereich (16) eindringt und eine Ausnehmung (26) erzeugt, wobei zu der Erzeugung der Ausnehmung (26) verlagertes Material vor dem Umformwerkzeug zu einer den Vorsprung (17) bildenden Verdickung führt,
**dadurch gekennzeichnet, dass**
g) die Anbindung des mindestens einen Vorsprungs (17) an die teilzylinderförmige Mantelfläche (24) der Lagerschale (6) derart gewählt ist, dass während der Montage von Lagerschale (1) und benachbartem Bauelement (15) in einer Kontaktfläche (20) zwischen dem Vorsprung (17) und dem benachbarten Bauelement (15) eine radial wirkende Kontaktspannung erzeugt wird, die groß genug ist, um eine plastische Verformung des benachbarten Bauelementes (15) im Bereich der Kontaktfläche (20) hervorzurufen, für eine Lagerung einer rotierenden Starterwelle eines Starters eines Kraftfahrzeugs radial innenliegend in der Lagereinheit (1), wobei das benachbarte Bauelement (15) ein Gehäuse des Starters ist.

6. Lagereinheit (1) nach Anspruch 5, **dadurch gekennzeichnet, dass** die Lagerschale (6) aus gehärtetem Stahl gefertigt ist und das benachbarte Bauelement (15) aus Aluminium gefertigt ist.

## Claims

1. Use of a bearing unit (1)
a) having a bearing shell (6)
b) which is supported with respect to an adjacent component (15) in the region of a bearing seat surface (18) and forms a rolling surface (25) for rolling bodies, wherein
c) the bearing shell (6) has at least one projection (17) which extends radially beyond the bearing seat surface (18), before the bearing shell (6) and adjacent component (15) are mounted,
d) a partial circumferential region (23) having a substantially partly cylindrical lateral surface (24) without a projection (17) adjoins a partial circumferential region (22) with the or at least one projection (17), in a cross section of the bearing shell (6),
e) the projection (17) is produced by cold forming or thermoforming of a transition region (16) between a side limb (10) and a base limb (8) by pressing a shaping tool against the transition region (16) in the direction of the bearing axis (7) in a partial circumferential region of the transition region (16), until the tool penetrates into the transition region (16) and produces a recess (26), wherein material which is displaced in order to produce the recess (26) in front of the shaping tool leads to a thickened portion, which forms the projection (17),
**characterized in that**:
f) the connection of the at least one projection (17) to the partly cylindrical lateral surface (24) of the bearing shell (6) is selected in such a way that, during the mounting of the bearing shell (1) and adjacent component (15), a radially acting contact stress is generated in a contact surface (20) between the projection (17) and the adjacent component (15), and this contact stress is sufficiently large to plastically deform the adjacent component (15) in the region of the contact surface (20),
for mounting a rotating starter shaft of a starter of a motor vehicle radially on the inside of the bearing unit (1), wherein the adjacent component (15) is a housing of the starter.

2. Use of a bearing unit (1) according to Claim 1, **characterized in that** at least one projection (17) or all of the projections (17) are arranged upstream or downstream of a rolling surface (25) of the bearing shell (6) in the axial direction.

3. Use of a bearing unit (1) according to Claim 2, **characterized in that** the bearing shell (6) is a shaped part having a U-shaped half longitudinal section with a base limb (8), which is oriented parallel to a bearing axis (7-7) and forms the rolling surface (25), and two side limbs (9, 10) which are oriented transversely with respect to the bearing axis (7-7), wherein the at least one projection (17) is arranged in a transition region (16) from the base limb (8) to a side limb (10).

4. Use of a bearing unit (1) according to Claim 3, **characterized in that** at least one seal (3, 4, 5), rolling bodies and/or a bearing cage (2) is/are trapped between the side limbs (9, 10).

5. Bearing unit (1)
a) having a component (15),
b) having a bearing shell (6)
c) which is supported with respect to the component (15) in the region of a bearing seat surface (18) and forms a rolling surface (25) for rolling bodies, wherein
d) the bearing shell (6) has at least one projection (17) which extends radially beyond the bearing seat surface (18), before the bearing shell (6) and adjacent component (15) are mounted,
e) a partial circumferential region (23) having a substantially partly cylindrical lateral surface (24) without a projection (17) adjoins a partial circumferential region (22) with the or at least one projection (17), in a cross section of the bearing shell (6),
f) the projection (17) is produced by cold forming or thermoforming of a transition region (16) between a side limb (10) and a base limb (8) by pressing a shaping tool against the transition region (16) in the direction of the bearing axis (7) in a partial circumferential region of the transition region (16), until the tool penetrates into the transition region (16) and produces a recess (26), wherein material which is displaced in order to produce the recess (26) in front of the shaping tool leads to a thickened portion, which forms the projection (17),
**characterized in that**
g) the connection of the at least one projection (17) to the partly cylindrical lateral surface (24) of the bearing shell (6) is selected in such a way that, during the mounting of the bearing shell (1) and adjacent component (15), a radially acting contact stress is generated in a contact surface (20) between the projection (17) and the adjacent component (15), and this contact stress is sufficiently large to plastically deform the adjacent component (15) in the region of the contact surface (20), for mounting a rotating starter shaft of a starter of a motor vehicle radially on the inside of the bearing unit (1), wherein the adjacent component (15) is a housing of the starter.

6. Bearing unit (1) according to Claim 5, **characterized in that** the bearing shell (6) is produced from hardened steel and the adjacent component (15) is produced from aluminum.

## Revendications

1. Utilisation d'une unité de palier (1)
a) comprenant une coque de palier (6),
b) qui est supportée dans la région d'une surface de siège de palier (18) par rapport à un élément structurel adjacent (15) et qui forme une surface de roulement (25) pour des corps de roulement,
c) la coque de palier (6), avant le montage de la coque de palier (6) et de l'élément structurel adjacent (15), possédant au moins une saillie (17) s'étendant radialement au-delà de la surface de siège de palier (18),
d) dans une section transversale de la coque de palier (6), une région périphérique partielle (23) avec une surface d'enveloppe (24) sensiblement en forme de cylindre partiel sans saillie (17) se raccordant, au niveau d'une région périphérique partielle (22), à la ou à l'au moins une saillie (17),
e) la saillie (17) étant fabriquée par déformation à froid ou à chaud d'une région de transition (16) entre une branche latérale (10) et une branche de base (8), en pressant un outil de façonnage dans la direction de l'axe de palier (7) dans une région périphérique partielle de la région de transition (16) contre la région de transition (16) jusqu'à ce que l'outil pénètre dans la région de transition (16) et produise un évidement (26), le matériau déplacé pour la production de l'évidement (26) donnant lieu à un épaississement formant la saillie (17) en avant de l'outil de façonnage,
**caractérisée en ce que**
f) la liaison de l'au moins une saillie (17) à la surface d'enveloppe (24) en forme de cylindre partiel de la coque de palier (6) est choisie de telle sorte que pendant le montage de la coque de palier (1) et de l'élément structurel adjacent (15), une tension de contact agissant radialement soit produite dans une surface de contact (20) entre la saillie (17) et l'élément structurel adjacent (15), laquelle tension de contact est suffisamment importante pour provoquer une déformation plastique de l'élément structurel adjacent (15) dans la région de la surface de contact (20), en vue d'un support d'un arbre de démarreur rotatif d'un démarreur d'un véhicule automobile, radialement à l'intérieur dans l'unité de palier (1), l'élément structurel adjacent (15) étant un boîtier du démarreur.

2. Utilisation d'une unité de palier (1) selon la revendication 1, **caractérisée en ce qu'**au moins une saillie (17) ou toutes les saillies (17) sont disposées dans la direction axiale devant ou derrière une surface de roulement (25) de la coque de palier (6).

3. Utilisation d'une unité de palier (1) selon la revendication 2, **caractérisée en ce que** la coque de palier (6) est une pièce façonnée avec une demi-coupe longitudinale en forme de U avec une branche de base (8) orientée parallèlement à un axe de palier (7-7), qui forme la surface de roulement (25), ainsi que deux branches latérales (9, 10) orientées transversalement à l'axe de palier (7-7), l'au moins une saillie (17) étant disposée dans une région de transition (16) de la branche de base (8) à une branche latérale (10).

4. Utilisation d'une unité de palier (1) selon la revendication 3, **caractérisée en ce qu'**au moins un joint d'étanchéité (3, 4, 5), des corps de roulement et/ou une cage de palier (2) sont reçus entre les branches latérales (9, 10).

5. Unité de palier (1),
a) comprenant un élément structurel (15),
b) une coque de palier (6),
c) qui est supportée dans la région d'une surface de siège de palier (18) par rapport à l'élément structurel (15) et qui forme une surface de roulement (25) pour des corps de roulement,
d) la coque de palier (6), avant le montage de la coque de palier (6) et de l'élément structurel adjacent (15), possédant au moins une saillie (17) s'étendant radialement au-delà de la surface de siège de palier (18),
e) dans une section transversale de la coque de palier (6), une région périphérique partielle (23) avec une surface d'enveloppe (24) sensiblement en forme de cylindre partiel sans saillie (17) se raccordant, au niveau d'une région périphérique partielle (22), à la ou à l'au moins une saillie (17),
f) la saillie (17) étant fabriquée par déformation à froid ou à chaud d'une région de transition (16) entre une branche latérale (10) et une branche de base (8), en pressant un outil de façonnage dans la direction de l'axe de palier (7) dans une région périphérique partielle de la région de transition (16) contre la région de transition (16) jusqu'à ce que l'outil pénètre dans la région de transition (16) et produise un évidement (26), le matériau déplacé pour la production de l'évidement (26) donnant lieu à un épaississement formant la saillie (17) en avant de l'outil de façonnage,
**caractérisée en ce que**
g) la liaison de l'au moins une saillie (17) à la surface d'enveloppe (24) partiellement cylindrique de la coque de palier (6) est choisie de telle sorte que pendant le montage de la coque de palier (1) et de l'élément structurel adjacent (15), une tension de contact agissant radialement soit produite dans une surface de contact (20) entre la saillie (17) et l'élément structurel adjacent (15), laquelle tension de contact est suffisamment importante pour provoquer une déformation plastique de l'élément structurel adjacent (15) dans la région de la surface de contact (20), en vue d'un support d'un arbre de démarreur rotatif d'un démarreur d'un véhicule automobile, radialement à l'intérieur dans l'unité de palier (1), l'élément structurel adjacent (15) étant un boîtier du démarreur.

6. Unité de palier (1) selon la revendication 5, **caractérisée en ce que** la coque de palier (6) est fabriquée en acier trempé et l'élément structurel adjacent (15) est fabriqué en aluminium.
